# EUROPEAN PATENT APPLICATION

(11) **EP 3 428 893 A1**
(43) Date of publication of application: **16.01.2019**
(21) Application number: 18183308.8
(22) Date of filing: 13.07.2018
(51) Int. Cl.: G07G 1/00, G06K 9/00, G06Q 20/40, G07C 9/00

(54) **ELECTRONIC SIGNATURE PAD, SETTLEMENT SYSTEM, AND METHOD OF CONTROLLING AN ELECTRONIC SIGNATURE PAD**

(30) Priority: 13.07.2017 JP 2017137108
(71) Applicant: Toshiba TEC Kabushiki Kaisha, Tokyo 141-8562 (JP)
(72) Inventor: ARAI, Kosuke, Shinagawa-ku,, Tokyo 141-8562 (JP)
(74) Representative: Takeuchi, Maya

(57) **Abstract**

According to an embodiment, an electronic signature pad includes a connection interface, a touchpad, and a controller. When the controller detects that a state of a settlement terminal is a predetermined state on the basis of information from the settlement terminal, the information being input through the connection interface, the controller sets the touchpad to a state where a signature input is acceptable. Further, the controller receives a signature input of a customer through the touchpad being in the state where a signature input is acceptable.

## Description

### FIELD

An embodiment to be described here generally relates to an electronic signature pad, a settlement system including an electronic signature pad, and a method of controlling an electronic signature pad.

### BACKGROUND

In recent years, in shops of shopping malls or the like, services for inputting a handwritten signature of a customer to a tablet terminal including a touchpad at the time of settlement with a credit card have been developed, instead of writing the signature on a receipt for the record of the shop.

However, after a card reader reads information of the credit card of the customer (hereinafter, simply referred to as card information), the tablet terminal performs preparation for receiving a handwritten signature input, which is to be performed by the customer when a sales-person (operator) verbally instructs the customer to perform a signature input. Therefore, it takes time to start a handwritten signature input to the tablet terminal after the customer passes the credit card to the operator. Thus, there has been a case where the customer needs to wait a long time before performing a handwritten signature input.

### SUMMARY OF INVENTION

To solve such problem, there is provided an electronic signature pad, which receives a signature input of a customer on the basis of an instruction from a settlement terminal that performs settlement with a credit card, the electronic signature pad comprising:
a connection interface that inputs and outputs information to and from the settlement terminal;
a touchpad that includes an input screen for receiving a signature of a customer and detects a touch operation of the customer that is input to the input screen; and
a controller that
   detects a state of the settlement terminal on the basis of information from the settlement terminal, the information being input through the connection interface,
   sets, under a condition that the detected state of the settlement terminal is a predetermined state, the touchpad to a state where a signature input is acceptable, and
   receives a signature input of the customer through the touchpad being in the state where a signature input is acceptable.

Preferably, the controller sets, under a condition that the detected state of the settlement terminal is a state where card information of the credit card has been read, the touchpad to the state where a signature input is acceptable.

Preferably still, the controller sets, under a condition that the detected state of the settlement terminal is a state where settlement processing for a former customer has been completed, the touchpad to the state where a signature input is acceptable.

Preferably yet, the controller causes, under a condition that the touchpad has been set to the state where a signature input is acceptable, the connection interface to output information to the settlement terminal, the information indicating that a signature input is acceptable.

Suitably, the controller starts, under a condition that the touchpad has been set to the state where a signature input is acceptable, determination on whether the touchpad has detected a touch operation input to the input screen or not.

Suitably yet, the electronic signature pad further comprises a memory that stores signature information based on the touch operation detected by the touchpad, wherein
the controller
clears information stored in the memory and thus sets the touchpad to the state where a signature input is acceptable, and
causes the memory to store the signature information based on the touch operation detected by the touchpad being in the state where a signature input is acceptable, and thus receives the signature of the customer.

The invention also relates to a method of controlling an electronic signature pad, the electronic signature pad receiving a signature input of a customer on a touchpad on the basis of an instruction from a settlement terminal that performs settlement with a credit card, the method comprising the steps of:
detecting a state of the settlement terminal on the basis of information from the settlement terminal, the information being input through a connection interface;
setting, under a condition that the detected state of the settlement terminal is a predetermined state, the touchpad to a state where a signature input is acceptable; and
receiving a signature input through the touchpad being in the state where a signature input is acceptable.

The invention also concerns a non-transitory computer readable medium storing a program causing a computer to execute the method described above.

The invention further relates to a settlement system, comprising:
a settlement terminal that performs settlement processing with a credit card; and
an electronic signature pad that receives a signature input of a customer on the basis of an instruction from the settlement terminal,
the settlement terminal including
   a first connection interface that inputs and outputs information to and from the electronic signature pad,
   a card reader that reads card information of the credit card, and
   a first controller that
      performs settlement processing on the basis of the card information read by the card reader, and
      causes the first connection interface to output information indicating a state of the settlement terminal,
the electronic signature pad including
   a second connection interface that inputs and outputs information to and from the settlement terminal through the first connection interface,
   a touchpad that includes an input screen for receiving a signature of a customer and detects a touch operation of the customer input to the input screen, and
   a second controller that
      detects a state of the settlement terminal on the basis of information from the settlement terminal, the information being input through the second connection interface,
      sets, under a condition that the detected state of the settlement terminal is a predetermined state, the touchpad to a state where a signature input is acceptable, and
      receives a signature input of the customer through the touchpad being in the state where a signature input is acceptable.

Preferably, the second controller sets, under a condition that the detected state of the settlement terminal is a state where the card information of the credit card has been read through the card reader, the touchpad to the state where a signature input is acceptable.

Preferably still, the second controller of the electronic signature pad causes, under a condition that the touchpad has been set to the state where a signature input is acceptable, the second connection interface to output information to the settlement terminal, the information indicating that a signature input is acceptable,
the settlement terminal further includes a display, and
the first controller of the settlement terminal causes the display to display the information from the electronic signature pad, the information being input through the first connection interface, the information indicating that a signature input is acceptable.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an outer appearance view of a settlement system according to an embodiment.
Fig. 2 is a hardware block diagram showing an example of a hardware configuration of a POS terminal according to the embodiment.
Fig. 3 is a hardware block diagram showing an example of a hardware configuration of an electronic signature pad according to the embodiment.
Fig. 4 is a functional block diagram showing an example of a functional configuration of the settlement system according to the embodiment.
Fig. 5 is a diagram showing an example of display indicating that a signature input is acceptable, which is to be displayed on a display of the POS terminal by the electronic signature pad according to the embodiment.
Fig. 6A is a diagram showing an example of a display state of a touchpad of the electronic signature pad according to the embodiment.
Fig. 6B is a diagram showing an example of a display state of the touchpad of the electronic signature pad according to the embodiment.
Fig. 6C is a diagram showing an example of a display state of the touchpad of the electronic signature pad according to the embodiment.
Fig. 7 is a flowchart showing an example of processing of the settlement system according to the embodiment.
Fig. 8 is a flowchart showing an example of processing of a settlement system according to a modification of the embodiment.
Fig. 9 is a flowchart showing an example of processing of a settlement system in the related art.

### DETAILED DESCRIPTION

According to one embodiment, an electronic signature pad receives a signature input of a customer on the basis of an instruction from a settlement terminal that performs settlement with a credit card. The electronic signature pad includes a connection interface, a touchpad, and a controller. The connection interface inputs and outputs information to and from the settlement terminal. The touchpad includes an input screen for receiving a signature of a customer and detects a touch operation of the customer that is input to the input screen. The controller detects a state of the settlement terminal on the basis of information from the settlement terminal, the information being input through the connection interface. The controller sets, under a condition that the detected state of the settlement terminal is a predetermined state, the touchpad to a state where a signature input is acceptable. Further, the controller receives a signature input of the customer through the touchpad being in the state where a signature input is acceptable.

Hereinafter, an embodiment will be described with reference to the drawings. In the drawings, the same reference symbols represent the same or similar units.

### (Description on Configuration of Settlement System)

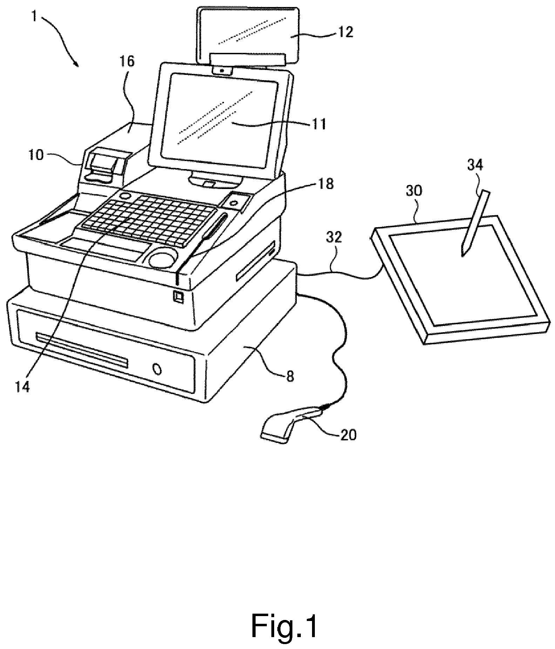

First, a settlement system including an electronic signature pad will be described. Fig. 1 is an outer appearance view of the settlement system. As shown in Fig. 1, a settlement system 1 includes a POS terminal 10 and an electronic signature pad 30. The POS terminal 10 performs, when a customer purchases a product, product registering processing of registering a product to be purchased, and settlement processing for a payment procedure of the customer regarding the purchased product. Note that the POS terminal 10 is an example of a settlement terminal. The electronic signature pad 30 is a tablet terminal for electronically inputting a signature of the customer who performs settlement with a credit card (hereinafter, simply referred to as credit-card settlement in some cases).

The POS terminal 10 is placed on a drawer 8 in which money and the like are stored. The POS terminal 10 includes an operator display 11, a customer display 12, a keyboard 14, a printer 16, a card reader 18, a bar code reader 20, and the like.

As shown in Fig. 1, the operator display 11 is disposed at the back of the keyboard 14. The operator display 11 is, for example, a display device such as a liquid crystal display. The operator display 11 displays information for an operator.

As shown in Fig. 1, the customer display 12 is disposed behind (at the back of) the operator display 11. The customer display 12 is, for example, a display device such as a liquid crystal display. The customer display 12 displays information for the customer.

As shown in Fig. 1, the keyboard 14 is disposed on the upper surface of the POS terminal 10. The keyboard 14 is one of user interfaces and receives an operation of the operator. The keyboard 14 includes various keys such as a sales-person key, a numeric keypad (numeric key), a cursor key, a selection/decision key, a subtotal key, and a close key. The sales-person key receives a press operation of the operator when the operator registers a sales-person code. The numeric keypad receives an input of a numerical value by the operator. The cursor key and the selection/decision key receive operations of the operator for selecting a predetermined item. The subtotal key receives an operation of the operator for giving an instruction to output the total amount of products to be purchased by the customer. The close key receives an operation of the operator for closing one transaction and settling the payment.

As shown in Fig. 1, the printer 16 is disposed on the left side of the upper surface of the POS terminal 10. The printer 16 outputs a receipt, a journal, or the like by printing predetermined information on paper.

The card reader 18 reads card information of the customer when the customer performs credit-card settlement. As shown in Fig. 1, the card reader 18 is integrated into the POS terminal 10. It should be noted that the card reader 18 may be provided separately from the POS terminal 10. In the case where the card reader 18 is provided separately from the POS terminal 10, the card reader 18 is connected to the POS terminal 10 via a universal serial bus (USB) cable.

The bar code reader 20 is one of user interfaces and is connected to the POS terminal 10. The bar code reader 20 optically reads code information such as a bar code, which is attached to a product to be purchased by the customer.

As shown in Fig. 1, the electronic signature pad 30 is connected to the POS terminal 10 via a universal serial bus (USB) cable 32. The electronic signature pad 30 includes a signature input screen that receives a handwritten signature input (hereinafter, simply referred to as signature input in some cases) of the customer using a stylus pen 34.

### (Description on Hardware Configuration of POS Terminal)

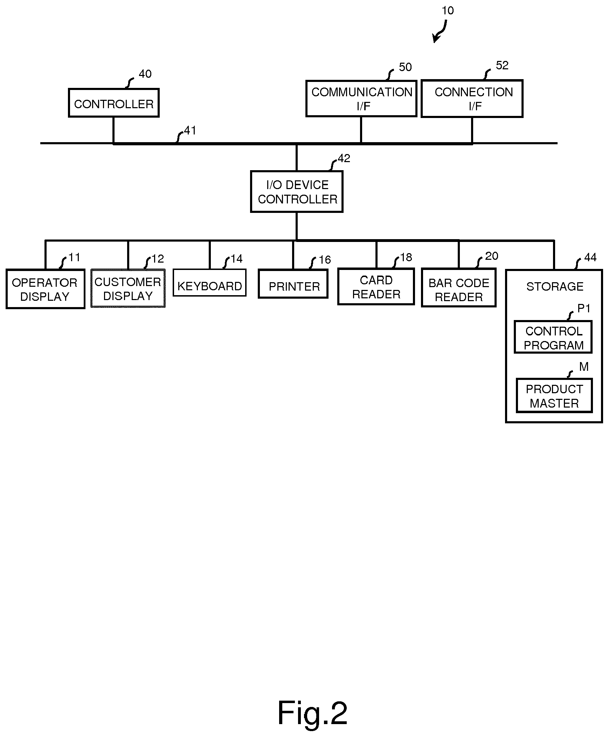

Next, a hardware configuration of the POS terminal 10 will be described with reference to the drawings. Fig. 2 is a hardware block diagram showing an example of a hardware configuration of the POS terminal 10. As shown in Fig. 2, the POS terminal 10 includes a controller 40. The controller 40 is, for example, a computer including a central processing unit (CPU), a read only memory (ROM), a random access memory (RAM), and the like. The operator display 11, the customer display 12, the keyboard 14, the printer 16, the card reader 18, and the bar code reader 20, which have been described above, are connected to the controller 40 via a bus line 41 and an input/output (I/O) device controller 42. Further, storage 44 is connected to the controller 40 via the bus line 41 and the I/O device controller 42.

The storage 44 includes, for example, a hard disk drive (HDD). The storage 44 may include, for example, a solid state drive (SSD). The storage 44 stores a control program P1 to be executed by the controller 40, a product master M, and the like. The product master M is downloaded from, for example, a server of the front office (not shown in the figure). The product master M is information including a product code and product information (product name, product price, and the like) in association with each other.

The controller 40 performs data communication with a credit-card settlement server (not shown in the figure) through a communication interface (I/F) 50 and a local area network (LAN) (not shown in the figure). The credit-card settlement server performs authorization of credit-card settlement, or the like. Further, the controller 40 performs data communication with the electronic signature pad 30 (see Fig. 1) through a connection I/F 52.

### (Description on Hardware Configuration of Electronic Signature Pad)

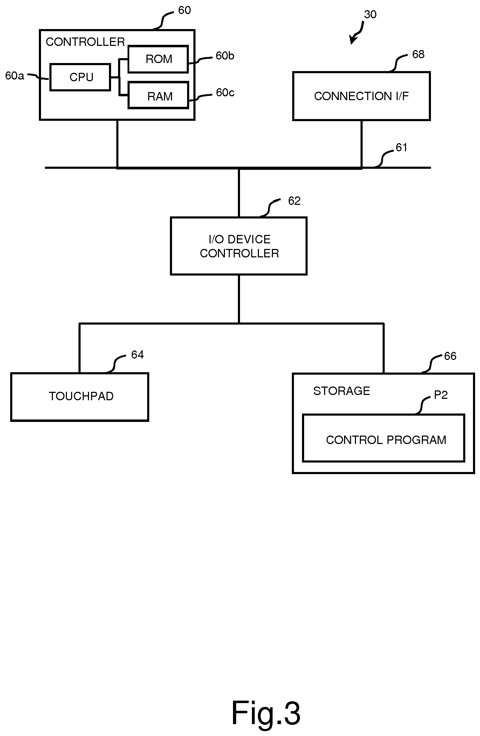

Next, a hardware configuration of the electronic signature pad 30 will be described with reference to the drawings. Fig. 3 is a hardware block diagram showing an example of a hardware configuration of the electronic signature pad 30. As shown in Fig. 3, the electronic signature pad 30 includes a controller 60. The controller 60 is, for example, a computer including a processor (CPU) 60a, a ROM 60b, a RAM 60c, and the like. A touchpad 64 and storage 66 are connected to the controller 60 via a bus line 61 and an I/O device controller 62.

The touchpad 64 is an example of the signature input screen described above. The touchpad 64 detects a position of the pen tip of the stylus pen 34 being in contact with the touchpad 64, on the basis of the detection principle of a resistive system, a capacitive system, or the like. Note that a stylus pen corresponding to the system of the touchpad 64 is used as the stylus pen 34.

The storage 66 includes, for example, an HDD. The storage 66 may include an SSD or the like. The storage 66 stores a control program P2 to be executed by the controller 60, and the like.

The controller 60 performs data communication with the POS terminal 10 through a connection I/F 68.

### (Description on Functional Configuration of Settlement System)

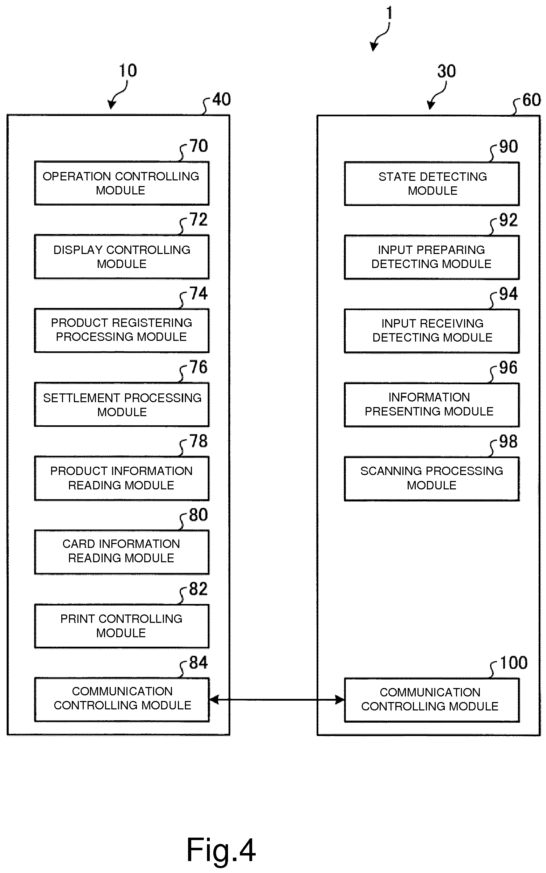

Next, a functional configuration of the settlement system 1 will be described with reference to Fig. 4. Fig. 4 is a functional block diagram showing an example of the functional configuration of the settlement system 1. The controller 40 of the POS terminal 10 loads the control program P1 (see Fig. 2) into the RAM of the controller 40 and executes the control program P1, thus achieving a plurality of functional modules shown in Fig. 4. In other words, the controller 40 executes the control program P1 and thus operates as an operation controlling module 70, a display controlling module 72, a product registering processing module 74, a settlement processing module 76, a product information reading module 78, a card information reading module 80, a print controlling module 82, and a communication controlling module 84.

Further, the controller 60 of the electronic signature pad 30 loads the control program P2 (see Fig. 3) into the RAM 60c and executes the control program P2, thus achieving a plurality of functional modules shown in Fig. 4.

In other words, the controller 60 executes the control program P2 and thus operates as a state detecting module 90, an input preparing module 92, an input receiving module 94, an information presenting module 96, a scanning processing module 98, and a communication controlling module 100.

First, the action of each functional module of the controller 40 of the POS terminal 10 will be described. The operation controlling module 70 performs operation control of the settlement system 1 according to operation information of the operator, the operation information being received through the keyboard 14.

The display controlling module 72 controls information to be displayed on the operator display 11 and the customer display 12.

The product registering processing module 74 performs product registering processing of registering a product purchased by the customer, on the basis of the operation information of the operator and product information read by the bar code reader 20, the operation information being received through the keyboard 14.

The settlement processing module 76 performs settlement processing for a payment procedure of the customer regarding the product purchased by the customer.

The product information reading module 78 controls the bar code reader 20 to read the product information of the product to be purchased by the customer.

The card information reading module 80 controls the card reader 18 to read card information when the customer performs settlement with a credit card.

The print controlling module 82 controls the printer 16 to output a transaction receipt or the like.

The communication controlling module 84 controls the connection I/F 52 to perform communication between the POS terminal 10 and the electronic signature pad 30.

Next, the action of each functional module of the controller 60 of the electronic signature pad 30 will be described. The state detecting module 90 detects whether the POS terminal 10 is in a predetermined state or not. Here, a predetermined state of the POS terminal 10 that is detected by the state detecting module 90 includes, for example, "a state where the POS terminal 10 has read the card information of the customer" and "a state where the POS terminal 10 has completed settlement processing for a payment procedure of a former customer". Note that the state detecting module 90 is an example of detecting means.

Under the condition that the state detecting module 90 has detected that the POS terminal 10 is in the predetermined state, the input preparing module 92 sets the electronic signature pad 30 to a state where a signature input is acceptable. Note that the input preparing module 92 is an example of input preparing means.

The input receiving module 94 receives a signature input to the touchpad 64 (signature input screen) of the electronic signature pad 30. Note that the input receiving module 94 is an example of input receiving means.

Under the condition that the input preparing module 92 has set the electronic signature pad 30 to the state where a signature input is acceptable, the information presenting module 96 causes the POS terminal 10 to display information indicating that a signature input is acceptable. Specifically, the information presenting module 96 outputs, to the POS terminal 10 through the connection I/F 68, an instruction to display information indicating that the electronic signature pad 30 is in a state where a signature input is acceptable. Note that the information presenting module 96 is an example of information presenting means.

The scanning processing module 98 scans the touchpad 64 and thus acquires information input to the electronic signature pad 30.

The communication controlling module 100 controls the connection I/F 68 to perform communication between the electronic signature pad 30 and the POS terminal 10.

### (Description on Operation Example of Controller of Electronic Signature Pad)

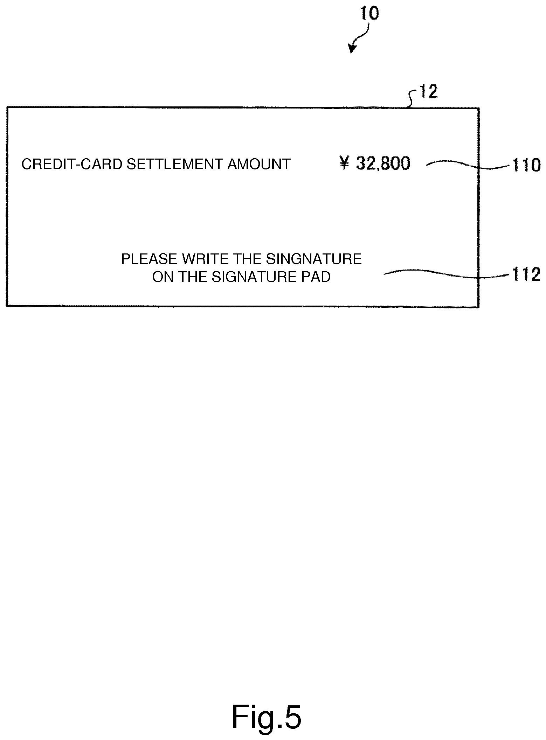

Next, an operation example of the controller 60 (information presenting module 96) will be described with reference to Fig. 5. Fig. 5 is a diagram showing an example of display indicating that a signature input is acceptable, which is to be displayed on the POS terminal 10 by the information presenting module 96.

As shown in Fig. 5, the information presenting module 96 causes the customer display 12 of the POS terminal 10 to display a credit-card settlement amount 110 and a message 112 indicating that a signature input is acceptable. The message 112 may be information to prompt the customer to write a signature, e.g., "Please write the signature on the signature pad."

After reading the message 112 on the customer display 12 shown in Fig. 5 and confirming the settlement amount 110, the customer inputs a signature to the electronic signature pad 30.

### (Description on Information Input to Electronic Signature Pad)

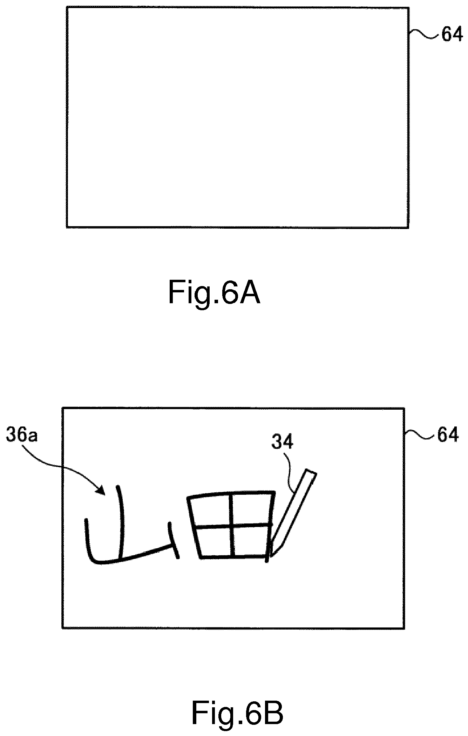

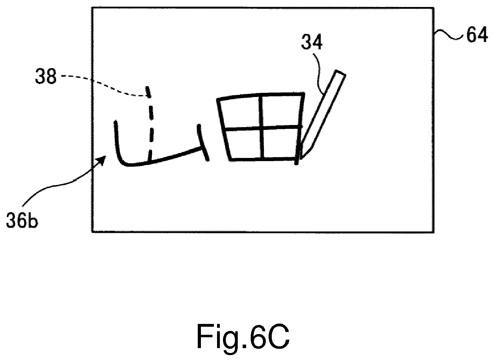

Next, information input to the electronic signature pad 30 will be described with reference to Figs. 6A, 6B, and 6C. Figs. 6A, 6B, and 6C are diagrams each showing a display state of the touchpad 64, the display state being based on information stored in a memory. Note that the memory used herein is the RAM 60c of the controller 60. The RAM 60c stores information as a signature, which is input to the electronic signature pad 30 (hereinafter, referred to as signature information in some cases). The signature information includes handwriting information that will be described later.

Fig. 6A shows a display state of the touchpad 64, which is based on the information stored in the RAM 60c of the controller 60, when the electronic signature pad 30 is set to a state where a signature input is acceptable, by the instruction of the input preparing module 92. When the electronic signature pad 30 enters the state where a signature input is acceptable, the information stored in the RAM 60c is cleared, and the electronic signature pad 30 enters a state waiting for a signature input. In other words, the touchpad 64 enters a display state in which nothing is displayed as shown in Fig. 6A, on the basis of the information stored in the RAM 60c, which has been cleared.

Fig. 6B shows a display state of the touchpad 64, which is based on the information stored in the RAM 60c of the controller 60, when the customer inputs a signature 36a to the electronic signature pad 30 in handwriting with the stylus pen 34. When the customer inputs the signature 36a to the electronic signature pad 30 in handwriting, the controller 60 scans the touchpad 64, for example, in sequence from left to right and from top to bottom (raster scan). By scanning the touchpad 64, the controller 60 detects, as two-dimensional information, a group of dots at which the stylus pen 34 touches the touchpad 64. The controller 60 stores, as signature information, the detected two-dimensional information in the RAM 60c. In other words, in the case of Fig. 6B, the input signature 36a is stored in the RAM 60c. Note that when detecting that a new handwritten input is not performed on the touchpad 64 for a predetermined time, the input receiving module 94 of the electronic signature pad 30 determines that the handwritten signature input is completed.

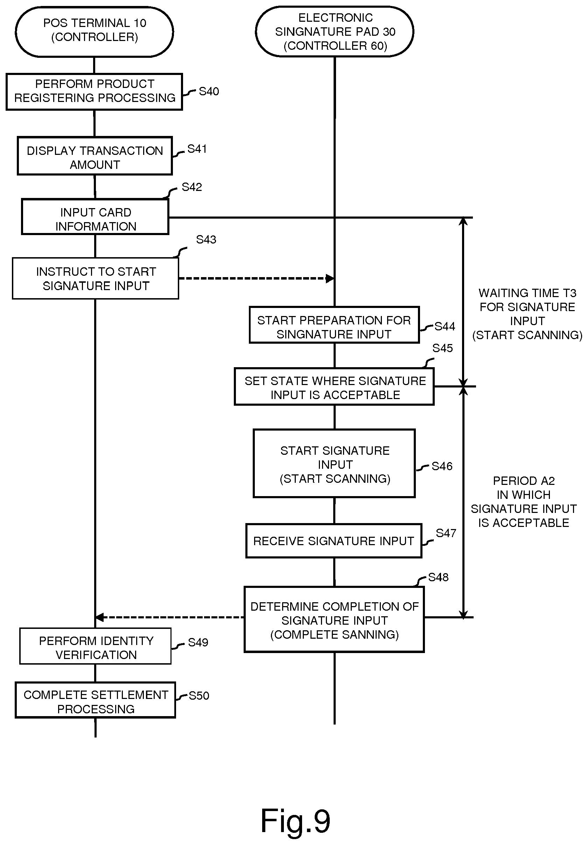

Fig. 6C shows a display state of the touchpad 64, which is based on the information stored in the RAM 60c of the controller 60, when the customer inputs a signature 36b to the electronic signature pad 30 in handwriting with the stylus pen 34. It should be noted that Fig. 6C shows a display state of the touchpad 64, in which the signature 36b is stored in the memory (RAM 60c), with the first stroke 38 (writing start portion) of the signature 36b being lost. If a signature input is performed before the electronic signature pad 30 enters the state where a signature input is acceptable, the lack of the writing start portion of the signature occurs in such a manner. If such lack occurs in the signature, the electronic signature pad 30 determines that the handwritten signature input is incomplete. As a result, the POS terminal 10 fails to complete the settlement processing. Note that the reason why the lack of the writing start portion of the signature occurs will be described later in detail (see Fig. 9).

### (Description on Processing Performed by Settlement System)

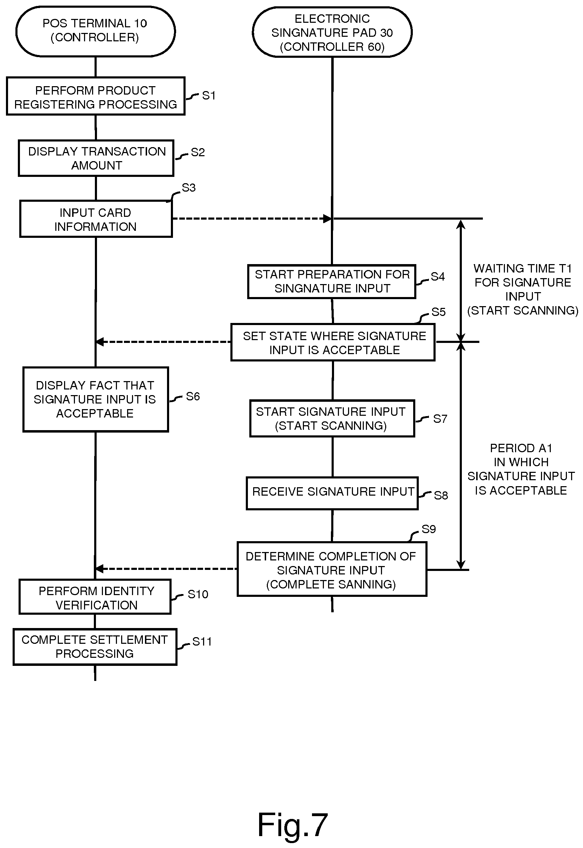

Next, the processing performed by the settlement system 1 will be described. Fig. 7 is a flowchart showing an example of processing of the settlement system 1 according to the embodiment.

First, in Step S1, the product registering processing module 74 of the controller 40 performs product registering processing of registering a product purchased by a customer.

Next, in Step S2, the display controlling module 72 of the controller 40 causes the customer display 12 to display a transaction amount.

If the customer selects credit-card settlement, in Step S3, the card information reading module 80 of the controller 40 causes the card reader 18 to read card information of the customer on the basis of a reading operation by the operator.

Meanwhile, in Step S4, the state detecting module 90 of the controller 60 detects whether the card information has been read or not. When the state detecting module 90 detects that the card information has been read, further in Step S4, the input preparing module 92 of the controller 60 starts preparation for a signature input so as to set the electronic signature pad 30 to the state where a signature input is acceptable.

When the input preparing module 92 completes the preparation for a signature input, in Step S5, the electronic signature pad 30 enters the state where a signature input is acceptable. When the electronic signature pad 30 enters the state where a signature input is acceptable, the information presenting module 96 of the controller 60 outputs, to the POS terminal 10, an instruction to display information indicating that the electronic signature pad 30 is in the state where a signature input is acceptable.

In Step S6, upon reception of the above-mentioned instruction from the electronic signature pad 30, the display controlling module 72 of the controller 40 causes the customer display 12 to display the fact that the electronic signature pad 30 is in the state where a signature input is acceptable (see Fig. 5).

Further, when the electronic signature pad 30 enters the state where a signature input is acceptable, in Step S7, the input receiving module 94 of the controller 60 causes the scanning processing module 98 to start scanning of the touchpad 64.

In Step S8, the scanning processing module 98 of the controller 60 repeats scanning of the touchpad 64. By repeating the scanning described above, the scanning processing module 98 receives a signature input.

In Step S9, the input receiving module 94 detects whether a new signature is input or not for a predetermined time on the basis of scan results of the scanning processing module 98. When detecting that a new signature is not input for the predetermined time, the input receiving module 94 determines that the signature input is completed, and then outputs, to the POS terminal 10, a notification indicating the completion of the signature input. Further, the controller 60 outputs the signature information, which is stored in the RAM 60c, to the POS terminal 10.

In Step S10, when receiving the above-mentioned notification indicating the completion of the signature input from the electronic signature pad 30, the controller 40 determines whether the handwritten signature input of the customer is the signature of the customer or not (hereinafter, simply referred to as identity verification). Specifically, the controller 40 of the POS terminal 10 receives the signature information (handwriting) from the electronic signature pad 30. The controller 40 then transmits the received signature information and the above-mentioned card information read by the card reader 18 (see Step S3) to the credit-card settlement server (not shown in the figure) through the communication I/F 50 and causes the credit-card settlement server to perform identity verification. The credit-card settlement server stores in advance card information and signature information of a customer who owns a credit card. The credit-card settlement server cross-checks the signature information and card information received from the POS terminal 10 and the signature information and card information stored in advance, thus performing the identity verification. The credit-card settlement server then transmits cross-check results to the POS terminal 10.

In Step S11, the controller 40 of the POS terminal 10 receives the cross-check results described above from the credit-card settlement server. Under the condition that the controller 40 has received the cross-check results in which the handwritten signature input to the electronic signature pad 30 is determined as the signature of the customer, the controller 40 completes the settlement processing for the payment procedure of the customer.

In the processing of the settlement system 1 shown in Fig. 7, a period from when the electronic signature pad 30 enters the state where a signature input is acceptable (Step S5) to the completion of the signature input (Step S9) is a period A1 in which the signature input of the customer is acceptable. The customer is informed of the fact that the electronic signature pad 30 has entered the state where a signature input is acceptable, by the display of the customer display 12 (Step S6). Therefore, the customer can easily recognize a timing to start the handwriting of a signature.

### (Description on Flow of Processing in Settlement System in Related Art)

Next, a flow of processing performed by a settlement system in the related art will be described as a comparative example with reference to Fig. 9. Fig. 9 is a flowchart showing an example of a flow of processing of a settlement system in the related art. Note that since the following description is a comparison with the settlement system 1 described in the embodiment, the reference symbols of the constituent elements are the same as those of the settlement system 1.

Product registering processing (Step S40), display of a transaction amount (Step S41), input of card information (Step S42) shown in Fig. 9, which are performed by the POS terminal 10, are the same as Step S1, Step S2, and Step S3 described with reference to Fig. 7, respectively.

In Step S43 shown in Fig. 9, the POS terminal 10 instructs the electronic signature pad 30 to start a signature input. Specifically, the keyboard 14 of the POS terminal 10 receives an operation of the operator, and the controller 40 of the POS terminal 10 then instructs the electronic signature pad 30 to start a signature input. At that time, the operator instructs the customer to perform a signature input.

In Step S44, the controller 60 (input preparing module 92) of the electronic signature pad 30 receives the instruction to start a signature input from the POS terminal 10 and starts preparation for a signature input.

In Step S45, when the input preparing module 92 completes the preparation for a signature input, the electronic signature pad 30 enters a state where a signature input is acceptable. The input receiving module 94 then causes the scanning processing module 98 to start scanning of the touchpad 64.

In Step S47, by repeating the scanning of the touchpad 64, the scanning processing module 98 receives a signature input. In Step S48, when detecting that a new signature is not input for a predetermined time, the input receiving module 94 determines that the signature input is completed.

In Step S49, the controller 40 of the POS terminal 10 determines whether the input signature is the signature of the customer or not. Under the condition that the input signature is determined as the signature of the customer, the POS terminal 10 completes the settlement processing for the payment procedure of the customer.

In other words, in the settlement system in the related art shown in Fig. 9, a period from when the electronic signature pad 30 enters the state where a signature input is acceptable (Step S45) to the completion of the signature input (Step S48) is a period A3 in which the signature input of the customer is acceptable. The period A3 in which the signature input of the customer is acceptable is similar to the period A1 in which the signature input of the customer is acceptable in the settlement system 1 of this embodiment shown in Fig. 7.

However, in the processing of the settlement system in the related art shown in Fig. 9, the electronic signature pad 30 starts preparation for a signature input after receiving the instruction to start a signature input from the POS terminal 10. Therefore, a waiting time T3 for a signature input from when the card information reading module 80 of the POS terminal 10 reads the card information to when the customer is allowed to perform a signature input is longer than a waiting time T1 for a signature input in the settlement system 1 shown in Fig. 7.

Further, in the processing of the settlement system in the related art shown in Fig. 9, the operator verbally instructs the customer to perform a signature input. This instruction by the operator is given before the electronic signature pad 30 completes the preparation for a signature input. Therefore, when the customer starts a signature input in response to the instruction by the operator, as described above, there arises a possibility that the lack of the writing start portion of the signature occurs (see Fig. 6C).

### (Description on Flow of Processing According to Modification of Embodiment)

Note that the predetermined state of the POS terminal 10 that is detected by the state detecting module 90 of the electronic signature pad 30 is not limited to the state where the card information reading module 80 of the POS terminal 10 has read the card information of the customer.

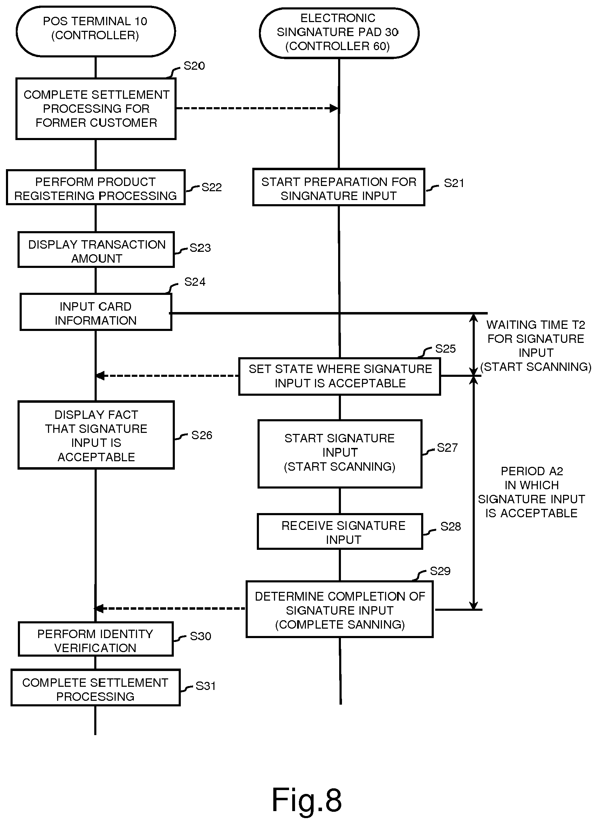

Fig. 8 is a flowchart showing an example of a flow of processing of a settlement system 1a (not shown in the figure) according to a modification of this embodiment. Note that a hardware configuration and a functional configuration of the settlement system 1a are the same as those of the settlement system 1 described above.

As shown in Fig. 8, for example, in Step S20, the controller 40 of the POS terminal 10 completes settlement processing for a payment procedure of a former customer.

In Step S21, the state detecting module 90 of the controller 60 detects whether the POS terminal 10 (the settlement processing module 76 of the controller 40) has completed the settlement processing or not. When the state detecting module 90 detects that the POS terminal 10 has completed the settlement processing, further in Step S21, the input preparing module 92 of the controller 60 starts preparation for a signature input so as to set the electronic signature pad 30 to the state where a signature input is acceptable.

Following the Step S20 described above, the controller 40 of the POS terminal 10 performs each processing, i.e., product registering processing (Step S22), display of a transaction amount (Step S23), and input of card information (Step S24). The product registering processing (Step S22), the display of a transaction amount (Step S23), and the input of card information (Step S24), which are performed by the POS terminal 10, are the same as Step S1, Step S2, and Step S3 described with reference to Fig. 7, respectively.

Further, when the input preparing module 92 of the electronic signature pad 30 completes the preparation for a signature input, in Step S25, the electronic signature pad 30 enters the state where a signature input is acceptable. When the electronic signature pad 30 enters the state where a signature input is acceptable, the information presenting module 96 of the controller 60 outputs, to the POS terminal 10, an instruction to display information indicating that the electronic signature pad 30 is in the state where a signature input is acceptable.

In Step S26, upon reception of the above-mentioned instruction from the information presenting module 96 of the electronic signature pad 30, the display controlling module 72 of the controller 40 causes the customer display 12 to display the fact that the electronic signature pad 30 is in the state where a signature input is acceptable (see Fig. 5).

Following the Step S25 described above, the controller 60 of the electronic signature pad 30 performs each processing, i.e., start of a signature input (Step S27), reception of the signature input (Step S28), and determination on completion of the signature input (Step S29). The above processing (Steps S27 to S29), which are performed by the electronic signature pad 30, are the same as Step S7, Step S8, and Step S9 described with reference to Fig. 7, respectively.

In Step S30, when receiving a notification indicating the completion of a signature input from the electronic signature pad 30, the controller 40 of the POS terminal 10 determines whether the handwritten signature input to the electronic signature pad 30 by the customer is the signature of the customer or not. Under the condition that the input signature is determined as the signature of the customer, the controller 40 of the POS terminal 10 completes the settlement processing for the payment procedure of the customer.

In other words, in the settlement system 1a according to the modification of the embodiment, a period from when the electronic signature pad 30 enters the state where a signature input is acceptable (Step S25) to the completion of the signature input (Step S29) is a period A2 in which the signature input is acceptable.

In the settlement system 1a according to the modification of the embodiment, a waiting time T2 for a signature input from when the POS terminal 10 reads the card information to when the customer is allowed to perform a signature input can further be shortened more than the waiting time T1 for a signature input, which has been described with reference to Fig. 7.

Note that in the above-mentioned settlement system 1a according to the modification of the embodiment, under the condition that the completion of the settlement processing for the payment procedure of the former customer has detected, the input preparing module 92 of the electronic signature pad 30 (controller 60) starts preparation for a signature input (see Step S20 and Step S21). However, there is no guarantee that the next customer performs settlement with a credit card. Even if the electronic signature pad 30 is set to the state where a signature input is acceptable, there may be a case where the next customer does not need to perform a signature input. Therefore, although not described in the flowchart of Fig. 8, when the controller 60 determines that no signature is input for a predetermined time after the electronic signature pad 30 enters the state where a signature input is acceptable, the controller 60 may reset the state where a signature input is acceptable.

As described above, in the electronic signature pad 30 of the embodiment, under the condition that the state detecting module 90 (detecting means) of the controller 60 has detected that the POS terminal 10 (settlement terminal) is in a predetermined state, the input preparing module 92 (input preparing means) of the controller 60 sets the electronic signature pad 30 to the state where a signature input is acceptable. Under the condition that the electronic signature pad 30 has entered the state where a signature input is acceptable, the input receiving module 94 (input receiving means) of the controller 60 then receives a signature input to the electronic signature pad 30. Therefore, according to the embodiment, it is possible to provide the electronic signature pad 30 capable of performing a signature input for a short time at the time of settlement.

Further, in the electronic signature pad 30 of the embodiment, the state detecting module 90 (detecting means) of the controller 60 detects that the POS terminal 10 (settlement terminal) has read the card information of the customer. Therefore, the input preparing module 92 of the controller 60 can set the electronic signature pad 30 to the state where a signature input is acceptable at the timing at which the card reader 18 of the POS terminal 10 has read the card information. As a result, as compared with the case in the related art where the POS terminal 10 instructs the electronic signature pad 30 to start a signature input, a timing to set the state where a signature input is acceptable can be advanced.

Further, in the electronic signature pad 30 as the modification of the embodiment, the state detecting module 90 (detecting means) of the controller 60 detects that the settlement processing for the payment procedure of the former customer has been completed. Therefore, the input preparing module 92 of the controller 60 can set the electronic signature pad 30 to the state where a signature input is acceptable, at a timing at which the POS terminal 10 has completed the settlement processing for the payment procedure of the former customer. Therefore, according to the modification of the embodiment, a timing at which the electronic signature pad 30 is set to the state where a signature input is acceptable can be advanced more.

Furthermore, in the electronic signature pad 30 of the embodiment, under the condition that the input preparing module 92 (input preparing means) of the controller 60 has set the electronic signature pad 30 to the state where a signature input is acceptable, the information presenting module 96 (information presenting means) of the controller 60 causes the POS terminal 10 to display information indicating that a signature input is acceptable. Therefore, according to the embodiment, the customer can reliably recognize a timing to start a signature input to the electronic signature pad 30.

Furthermore, in the electronic signature pad 30 of the embodiment, under the condition that the input preparing module 92 (input preparing means) of the controller 60 has set the electronic signature pad 30 to the state where a signature input is acceptable, the controller 60 starts determination on whether a signature input has been performed on the touchpad 64 of the electronic signature pad 30 or not. Therefore, the electronic signature pad 30 does not receive a signature input performed before the electronic signature pad 30 enters the state where a signature input is acceptable. Therefore, according to the embodiment, it is possible to prevent the lack of a writing start portion of the signature.

The embodiment is not limited to the settlement systems described above. For example, the control program PI executed by the POS terminal 10 and the control program P2 executed by the electronic signature pad 30 may be respectively stored in the storage 44 and the storage 66 in advance. Alternatively, the control programs P1 and P2 described above may be recorded on a computer-readable recording medium such as a CD-ROM, a flexible disk (FD), a CD-R, or a DVD (Digital Versatile Disk) in a file of an installable or executable format and then provided. Alternatively, the control programs P1 and P2 described above may be stored in a computer connected a network and provided by downloading via the network. Alternatively, the control programs P1 and P2 described above may be provided or distributed via a network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An electronic signature pad, which receives a signature input of a customer on the basis of an instruction from a settlement terminal that performs settlement with a credit card, the electronic signature pad comprising:
a connection interface that inputs and outputs information to and from the settlement terminal;
a touchpad that includes an input screen for receiving a signature of a customer and detects a touch operation of the customer that is input to the input screen; and
a controller that
detects a state of the settlement terminal on the basis of information from the settlement terminal, the information being input through the connection interface,
sets, under a condition that the detected state of the settlement terminal is a predetermined state, the touchpad to a state where a signature input is acceptable, and
receives a signature input of the customer through the touchpad being in the state where a signature input is acceptable.

2. The electronic signature pad according to Claim 1, wherein
the controller sets, under a condition that the detected state of the settlement terminal is a state where card information of the credit card has been read, the touchpad to the state where a signature input is acceptable.

3. The electronic signature pad according to Claim 1 or 2, wherein
the controller sets, under a condition that the detected state of the settlement terminal is a state where settlement processing for a former customer has been completed, the touchpad to the state where a signature input is acceptable.

4. The electronic signature pad according to any one of Claims 1 to 3, wherein
the controller causes, under a condition that the touchpad has been set to the state where a signature input is acceptable, the connection interface to output information to the settlement terminal, the information indicating that a signature input is acceptable.

5. The electronic signature pad according to any one of Claims 1 to 4, wherein
the controller starts, under a condition that the touchpad has been set to the state where a signature input is acceptable, determination on whether the touchpad has detected a touch operation input to the input screen or not.

6. The electronic signature pad according to any one of Claims 1 to 5, further comprising
a memory that stores signature information based on the touch operation detected by the touchpad, wherein
the controller
clears information stored in the memory and thus sets the touchpad to the state where a signature input is acceptable, and
causes the memory to store the signature information based on the touch operation detected by the touchpad being in the state where a signature input is acceptable, and thus receives the signature of the customer.

7. A method of controlling an electronic signature pad, the electronic signature pad receiving a signature input of a customer on a touchpad on the basis of an instruction from a settlement terminal that performs settlement with a credit card, the method comprising the steps of:
detecting a state of the settlement terminal on the basis of information from the settlement terminal, the information being input through a connection interface;
setting, under a condition that the detected state of the settlement terminal is a predetermined state, the touchpad to a state where a signature input is acceptable; and
receiving a signature input through the touchpad being in the state where a signature input is acceptable.

8. A non-transitory computer readable medium storing a program causing a computer to execute the method according to claim 7.

9. A settlement system, comprising:
a settlement terminal that performs settlement processing with a credit card; and
an electronic signature pad that receives a signature input of a customer on the basis of an instruction from the settlement terminal,
the settlement terminal including
a first connection interface that inputs and outputs information to and from the electronic signature pad,
a card reader that reads card information of the credit card, and
a first controller that
performs settlement processing on the basis of the card information read by the card reader, and
causes the first connection interface to output information indicating a state of the settlement terminal,
the electronic signature pad including
a second connection interface that inputs and outputs information to and from the settlement terminal through the first connection interface,
a touchpad that includes an input screen for receiving a signature of a customer and detects a touch operation of the customer input to the input screen, and
a second controller that
detects a state of the settlement terminal on the basis of information from the settlement terminal, the information being input through the second connection interface,
sets, under a condition that the detected state of the settlement terminal is a predetermined state, the touchpad to a state where a signature input is acceptable, and
receives a signature input of the customer through the touchpad being in the state where a signature input is acceptable.

10. The settlement system according to Claim 9, wherein
the second controller sets, under a condition that the detected state of the settlement terminal is a state where the card information of the credit card has been read through the card reader, the touchpad to the state where a signature input is acceptable.

11. The settlement system according to Claim 9 or 10, wherein
the second controller of the electronic signature pad causes, under a condition that the touchpad has been set to the state where a signature input is acceptable, the second connection interface to output information to the settlement terminal, the information indicating that a signature input is acceptable,
the settlement terminal further includes a display, and
the first controller of the settlement terminal causes the display to display the information from the electronic signature pad, the information being input through the first connection interface, the information indicating that a signature input is acceptable.
